(19) Europäisches Patentamt
European Patent Office
Office européen des brevets

(11) **EP 1 045 375 A2**

(12) **EUROPEAN PATENT APPLICATION**

(43) Date of publication:
**18.10.2000 Bulletin 2000/42**

(51) Int. Cl.$^7$: **G11B 5/33**

(21) Application number: **00108280.9**

(22) Date of filing: **14.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **15.04.1999 JP 10853799**
            **11.05.1999 JP 13063199**

(71) Applicant:
**Matsushita Electric Industrial Co., Ltd.
Kadoma-shi, Osaka 571-8501 (JP)**

(72) Inventors:
• **Murata, Akio
  Suita City, 564-0073 (JP)**

• **Kuroe, Akio
  Katano City, 576-0013 (JP)**
• **Muramatsu, Sayuri
  Hirakata City, 573-0057 (JP)**

(74) Representative:
**Jung, Elisabeth, Dr. et al
Patentanwälte,
Dr. Elisabeth Jung,
Dr. Jürgen Schirdewahn,
Claus Gernhardt,
Postfach 40 14 68
80714 München (DE)**

(54) **Magnetic reproduction device, magnetic head using the device and method for producing the magnetic head**

(57)    A main magnetic pole core (2) of a metallic soft magnetic multi-layer film is formed on a substrate (100) via a non-magnetic insulation film (1a), two detecting conductor films (3a,3b) are making contact with both side faces of the main magnetic pole core respectively, and a high-frequency signal is applied across the two detecting conductor films. When a magnetic flux passing through the main magnetic pole core (2) changes, its impedance changes, and this change is taken out as the change in the amplitude of the high-frequency signal. A pair of electrode terminals (5a,5b) connected to both ends of the detecting conductor films (3a,3b) respectively, a power source terminal and a ground terminal (4a and 4b, respectively) are formed on the substrate. A semiconductor bare chip (127) used as a high-frequency amplifier is installed so as to be opposite to these terminals, whereby the terminals of the bare chip are directly connected to the electrode terminals, power source terminal and ground terminal.

FIG. 1

**Description**

BACKGROUND OF THE INVENTION

The present invention relates to a magnetic reproduction device for reproducing information regarding video, audio, text and the like recorded and stored in front of on the orientation and intensity of magnetization on a magnetic recording medium, and also relates to a magnetic head using the magnetic reproduction device and a method of producing the magnetic head.

In recent years, magnetic storage apparatus are requested to be more compact and have larger storage capacities by increasing the density of storage. As the storage capacities of the storage apparatus increase, the speed of access to recorded information, the speed of information transfer and the like are requested to be higher.

To meet these requests, such an inductive-type thin-film magnetic head as disclosed in Japanese Laid-open Patent Application No. Sho 55-84020 for example has become to be used mainly for hard disk drives (HDD). The above-mentioned thin-film magnetic head has a lower inductance than a bulk-type magnetic head, thereby being capable of recording and reproducing at higher frequencies.

In the hard disk drive for example, a disk diameter is made smaller for size reduction purposes thereof, whereby the relative speed between the head and a recording medium is lowered. For this reason, it is desired to use a magnetic-flux-response-type magnetic head as a reproduction head. As the magnetic-flux-response-type magnetic head, an MR reproduction head using a magnetoresistance effect device (MR device) is drawing an attention. The MR reproduction head is advantageous for a narrower track configuration and has a higher reproduction output (sensitivity) per unit track width. A combined MR head, a combination of the MR reproduction head and a recording-use inductive-type thin-film magnetic head, has been put into practical use. Furthermore, another combined MR head comprising a giant magnetoresistance effect device (GMR device) using a thin-film material having a larger magnetoresistance effect has been researched and developed energetically to further improve the reproduction output.

In order to attain a high-density and a large-capacity storage device, it is necessary to adopt a technology capable of accurately reproducing high-density information having been stored. For this purpose, it is necessary to use a reproduction head having high reproduction sensitivity. In this respect, the combined type MR head is promising. However, in the case that the MR device is used for the reproduction head, a shield layer around the MR device, and a reproduction-use gap are required, and the film of the MR device is required to have a single magnetic domain structure. For this reason, the structure of the head becomes more complicated than the conventional inductive head. As the structure of the head becomes more complicated, a higher fabrication technology is required, whereby it is difficult to attain a high yield rate.

A magnetic head using a magnetic impedance effect (MI effect), which is different from the magnetoresistance effect, has also been developed in recent years. A conventional example thereof will be described below.

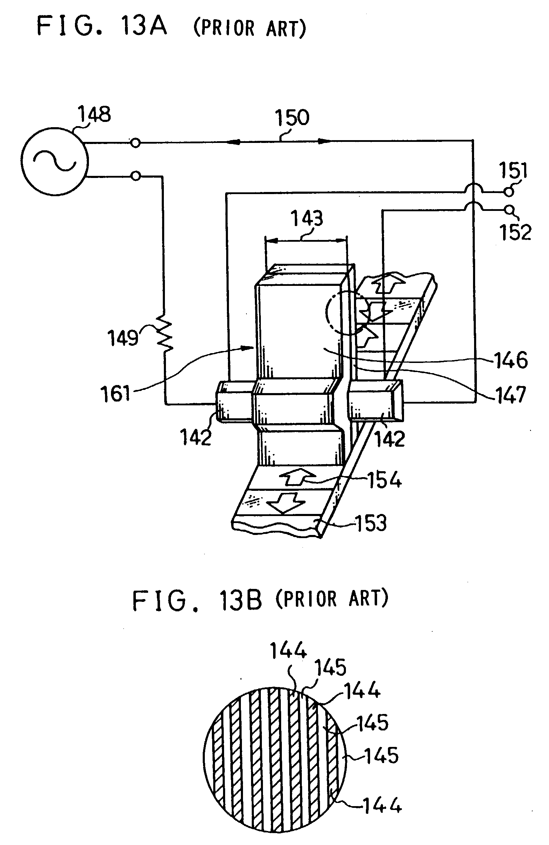

FIG. 13A is a perspective view showing a conventional MI head 161 using the magnetic impedance effect, disclosed in The Technical Report of the Society of Electronic Information MR95-85.

Referring to FIG. 13A, in a detecting section based on the magnetic impedance effect (hereinafter referred to as a magnetic detection portion), a thin-film detecting conductor 142 formed of a conductive metal thin film is held between a pair of soft magnetic cores 146 and 147 having a width nearly equal to the track width 143 of a magnetic recording medium 153. The pair of soft magnetic cores 146 and 147 is each formed of a multi-layer film including Permalloy films 144 and $SiO_2$ films 145 laminated alternately as shown in FIG. 13B, a partially magnified view of FIG. 13A.

When a signal magnetization 154 recorded on the magnetic recording medium is reproduced by the conventional MI head 161, a high-frequency carrier signal in the UHF band is output from a high-frequency generator 148. This signal is applied to a thin-film detecting conductor 142 via a resistor 149 to flow a high-frequency current 150. An impedance across terminals 151 and 152 connected to two ends of the thin-film detecting conductor 142 changes due to the magnetic impedance effect. Therefore, a voltage corresponding to a signal magnetization is generated across both the terminals. The axes of easy magnetization of the soft magnetic cores 146 and 147 are oriented in the width direction of the recording track of the magnetic recording medium 153 in advance.

In the case when no signal magnetization 154 is present on the magnetic recording medium 153, the voltage of a high-frequency carrier signal, being equal to the product of the high-frequency current 150 and the impedance across the terminals 151 and 152 of the thin-film detecting conductor 142, generates across the terminals 151 and 152.

In the case when the signal magnetization 154 is present on the magnetic recording medium 153, the respective axes of easy magnetization of the soft magnetic cores 146 and 147 are dislocated from the previously oriented directions due to the signal magnetization 154. As a result, the impedance across both terminals 151 and 152 of the thin-film detecting conductor 142 is changed by the magnetic impedance effect due to the applied signal magnetization 154.

Because of the change in the impedance of the thin-film detecting conductor 142, the high-frequency carrier signal is AM-modulated and detected by the signal magnetization 154 of the magnetic recording medium 153. The signal magnetization 154 of the magnetic recording medium 153 can be read by AM-detecting this signal.

The detection sensitivity for the signal magnetization 154 on the magnetic recording medium 153 by the magnetic impedance effect is far higher than the detection sensitivity by a magnetoresistance effect. The detection output of the MI head using the magnetic impedance effect is about 10 times as high as that of a giant MR head using magnetic bubbles, which is being developed at present.

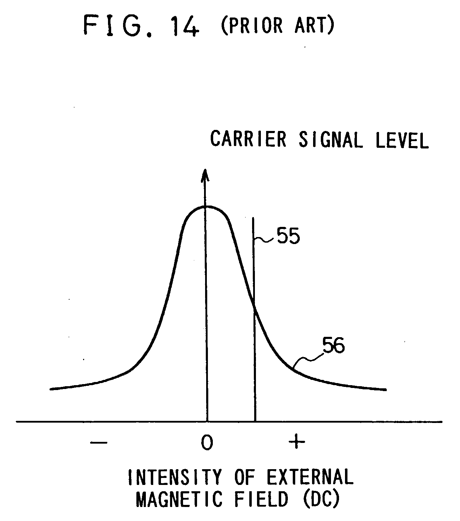

FIG. 14 is a graph showing the level change characteristic of the high-frequency carrier signal depending on the magnetic field applied to the above-mentioned MI head 161. Referring to FIG. 14, a characteristic curve 56 was obtained when the MI head 161 was placed at the central portion of a Helmholtz coil, and when the intensity of the DC magnetic field to be applied was changed at the frequency of the high-frequency carrier signal of 1 GHz.

According to this characteristic curve 56 shown in FIG. 14, the level of the high-frequency carrier signal changes gradually in the proximity wherein the intensity of the magnetic field to be applied is zero. A linear portion of the characteristic curve 56 is used to sensitively modulate the high-frequency carrier signal depending on the change in the intensity of the magnetic field and to obtain the waveform of the high-frequency carrier signal having a low distortion. For this purpose, a bias magnetic field 55 must be set properly. In the above-mentioned MI head, the DC current generating the bias magnetic field 55 is superimposed on the high-frequency carrier signal. The DC current flows through the thin-film detecting conductor 142, and a DC magnetic field is generated. This DC magnetic field is used as a bias magnetic field.

The change ratio of the impedance of the detecting conductor due to the magnetic impedance effect is proportional to the product of the frequency of the high-frequency carrier signal applied to the detecting conductor and the change ratio of the magnetic permeability of the soft magnetic cores. In the conventional MI head, the permalloy film 144 having a large change in permeability is used as the material of the soft magnetic cores 146 and 147, and the multi-layer film including the Permalloy films 144 and $SiO_2$ films 145 laminated alternately is used to prevent the occurrence of eddy currents at high frequencies. In addition, the frequency of the high-frequency carrier signal is set at a high frequency of several hundred MHz or more.

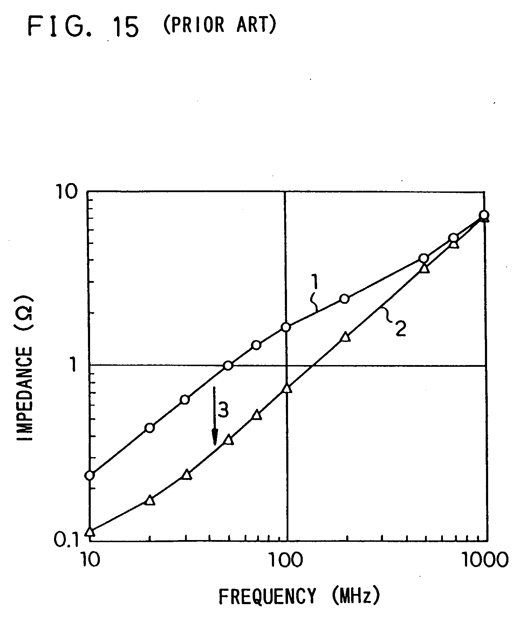

However, the conventional MI head 161 has a problem of significantly reducing the magnetic impedance effect in the high-frequency region as explained below referring to FIG. 15.

FIG. 15 is a graph showing the change in the overall impedance of the detecting conductor measured by using an impedance meter depending on the frequency of the high-frequency carrier signal in the case when a magnetic field is applied to the conventional MI head 161 and in the case when no magnetic field is applied thereto.

As shown in FIG. 15, in the conventional MI head, the change in the overall impedance of the detecting conductor in the case when the intensity of the applied magnetic field is zero decreases in a high-frequency region of 100 MHz or more as indicated by curve 1. The change in the overall impedance of the detecting conductor in the case when the intensity of the applied magnetic field is 5 Oe increases nearly linearly as indicated by change curve 2 as the frequency of the high-frequency carrier signal rises. As a result, the magnetic impedance effect indicated by arrow 3 in the figure decreases abruptly in a high-frequency region of 200 MHz or more.

This kind of MI head has not yet been put in practical use since the operation characteristic of the MI head in the high-frequency region of the high-frequency carrier signal has not yet been analyzed clearly. Therefore, in order to put the MI head in practical use, it has been demanded to analyze its operation characteristic in the high-frequency region and to find out a new detection method for sensitively detecting the change in the impedance of the detecting conductor due to the magnetic impedance effect in the high-frequency region.

The present invention is intended to provide a magnetic reproduction device having a relatively simple structure and high reproduction sensitivity, and to provide a magnetic head using the magnetic reproduction device and a method of producing the magnetic head by realizing the new detection method.

BRIEF SUMMARY OF THE INVENTION

A magnetic reproduction device in accordance with the present invention comprises a first non-magnetic insulation film formed on an insulation substrate, a magnetic pole formed of a metallic soft magnetic film formed on the first non-magnetic insulation film, a second non-magnetic insulation film formed on the metallic soft magnetic film, conductors formed on the insulation substrate and electrically connected to both ends of the metallic soft magnetic film respectively, a first pair of electrode terminals connected to the conductors respectively to supply a high-frequency current from an external constant current source to the conductors, and a second pair of electrode terminals connected to the conductors respectively to output a voltage generated by the high-frequency current.

According to the present invention, when a magnetic field is applied while a high-frequency current flows through the metallic soft magnetic film via the conductors, the impedance of the metallic magnetic film changes. Because of the change in the impedance, the product of the high-frequency current and the impedance, that is, a voltage changes. Since this voltage change depends on the intensity of the magnetic field, the magnetization of a magnetic recording medium can be detected as a change in voltage.

A magnetic reproduction device in accordance with the present invention from another aspect comprises a magnetic pole formed of a multi-layer film including metallic soft magnetic films and conductive magnetic insulation films alternately laminated on an insulation substrate, a main magnetic pole core including metallic soft magnetic films and electrical insulation films alternately laminated on the magnetic pole formed of the multi-layer film, conductors formed on the insulation substrate and electrically connected to both ends of the metallic soft magnetic films of the main magnetic pole core respectively, a first pair of electrode terminals connected to the conductors respectively to supply a high-frequency current from an external constant current source to the conductors, and a second pair of electrode terminals connected to the conductors respectively to output a voltage generated by the high-frequency current.

Since the main magnetic pole core is provided with a magnetic pole including a multi-layer film formed of magnetic films and non-magnetic films alternately laminated, the magnetic charges at the ends of the magnetic films at individual layers are cancelled with one another among the multi-layer films. For this reason, even if the magnetic pole has a narrow width, the magnetic domains of the magnetic films are not disturbed, and permeability can be maintained high even at high frequencies. This improves the characteristic of the magnetic reproduction device at high frequencies.

A method of producing a magnetic head in accordance with the present invention comprises a step of forming a magnetic base wherein a part of an oxide magnetic substance is grooved by etching and the groove is filled with a non-magnetic insulator by sputtering, a step of forming a first metallic soft magnetic multi-layer film having a multi-layer structure and being magnetically insulated and electrically conductive among the layers on the magnetic base by sputtering, a step of forming first conductors electrically connected to the ends of the first metallic soft magnetic multi-layer film and resting on parts of the upper face of the first metallic soft magnetic multi-layer film by sputtering, a step of forming a second metallic soft magnetic multi-layer film insulated electrically and magnetically among the layers on the first conductors and the first metallic soft magnetic multi-layer film by sputtering, a step of forming second conductors so as to be electrically connected to the side faces of the second metallic soft magnetic multi-layer film and resting on the upper face of the second metallic soft magnetic multi-layer film by sputtering, and a step of forming a pair of electrode terminals connected to both ends of the second conductors respectively.

According to the method of producing the magnetic reproduction device of the present invention, the elements of the magnetic reproduction device can be formed in sequence in a single processing chamber by sputtering. Therefore, the production process is simple and the production cost can be reduced.

The magnetic head formed of the magnetic reproduction device of the present invention is simpler in structure than the conventional inductive magnetic head and the conventional MR magnetic head. The production process is also simpler. For this reason, it is easy to obtain a relatively high yield, thereby being excellently suited for mass production. In addition, it is possible to carry out reproduction by using a magnetic impedance effect at high sensitivity in comparison with the conventional heads. Therefore, the recording density on a magnetic recording medium can be raised further. Since the magnetic head of the present invention is a magnetic-flux-response type just like the conventional MR magnetic head, the magnetic head can also meet the needs for lower speed owing to the miniaturization of recording/reproducing apparatuses.

Another magnetic head of the present invention has a magnetic detection portion comprising a two-layer soft magnetic film formed on a substrate to detect the magnetization of a recording magnetic medium and a detecting conductor thin film formed on the substrate such that a part thereof is held between the two layers of the two-layer soft magnetic film. In addition, the magnetic head has a ground electrode terminal formed on one side of the soft magnetic film on the substrate and connected to one terminal of the detecting conductor thin film, and a detecting electrode terminal formed on the other side of the soft magnetic film on the substrate and connected to the other terminal of the detecting conductor thin film via a dielectric film. Furthermore, the magnetic head has a signal supply terminal formed on the substrate to input a high-frequency carrier signal with a superimposed DC current for generating a bias magnetic field from an external power source, and a ground terminal. The signal supply terminal is connected to the detecting electrode terminal via a conductor film, and the ground terminal is connected to the ground electrode terminal via a conductor film. In addition, at least the signal input terminal and the ground terminal of a high-frequency amplifier comprising a semiconductor bare chip and amplifying the high-frequency carrier signal are directly connected to the detecting electrode terminal and the ground electrode terminal respectively.

According to the magnetic head, the detecting conductor thin film and the high-frequency amplifier are directly connected to the detecting electrode terminal and the ground electrode terminal respectively. This prevents the impedance component in the high-frequency region from increasing because of the length of the detecting conductor thin film substantially extended by connection lead wires. For this reason, the change in the impedance of the detecting conductor thin film due to the magnetic impedance effect in the high-frequency region is not attenuated but can be detected. As a result, it is possible to attain an MI head having a high sensitivity even in the high-frequency region.

The magnetic head having the above-mentioned configuration is preferably provided with a first microstrip line comprising a first ground film formed on the substrate, a dielectric film formed on the first ground film, and the detecting conductor thin film and the detecting electrode terminal formed on the dielectric film.

With this configuration, the input impedance of the high-frequency amplifier can be matched to the characteristic impedance of the detecting conductor thin film, thereby preventing any loss due to an impedance mismatch.

In addition, the faces of the detecting electrode terminal and the ground electrode terminal are preferably smoothened so that the height of the detecting electrode terminal and the ground electrode terminal from the surface of the substrate is larger than the height of a magnetic detection portion configured so as to include the soft magnetic film and so that an overcoat material covering the magnetic detection portion is as high as the detecting electrode terminal and the ground electrode terminal.

With this configuration, when the high-frequency amplifier comprising the semiconductor bare chip is mounted on a magnetic head substrate, no bending stress is applied to a silicon substrate on which the semiconductor bare chip is formed. This prevents the silicon substrate from breaking.

A magnetic head in accordance with the present invention from still another aspect is the magnetic head having the above-mentioned configuration further having a second microstrip line comprising a signal supply terminal and a ground terminal formed on the surface of the substrate and the substrate and a second ground film formed on the bottom face of the substrate, and a first microstrip line comprising a first ground film formed on the surface of the substrate, a dielectric film formed on the first ground film and a detecting conductor thin film formed on the dielectric film to connect the first ground film to the second ground film via a conductor film.

With this configuration of the magnetic head, the characteristic impedance of the transmission paths connecting the terminals formed on the substrate can be matched to the characteristic impedance of external transmission paths. It is thus possible to prevent any loss due to an impedance mismatch in the case of connection to an external high-frequency generator or AM detector.

In this configuration of the magnetic head, it is preferable that the characteristic impedance of the first microstrip line is nearly equal to that of the second microstrip line.

In addition, in the above-mentioned two configurations of the magnetic head, it is preferable that the detecting electrode terminal is connected to the signal supply terminal via a resistor thin film having a resistance of 50 ohms.

Furthermore, it is preferable that the length of the detecting conductor thin film is 100μm or less.

In the magnetic head of the present invention, the lengths of the detecting conductors can be shortened substantially by directly connecting the terminals of the semiconductor bare chip used as a high-frequency amplifier to the electrode terminals of the MI head. Consequently, the inductance components of the detecting conductors can be reduced significantly, whereby it is possible to detect the change in the impedances of the detecting conductors due to the magnetic impedance effect in the high-frequency region. As a result, it is possible to attain a highly sensitive MI head ideally suited for magnetic reproduction from high-density recording media.

In addition, by forming the microstrip lines on the substrate of the magnetic head, it is possible to attain a magnetic head having impedance matched to a high-frequency carrier signal.

BRIEF DESCRIPTION OF THE SEVERAL VIEWS OF THE DRAWING

FIG. 1 is a perspective view showing a magnetic reproduction device in accordance with a first embodiment of the present invention;

FIG. 2 is a perspective view showing a magnetic reproduction device in accordance with a second embodiment of the present invention;

FIG. 3 is a graph showing the relationship between the impedance of the magnetic reproduction device of the present invention and an external magnetic field;

FIG. 4A is a graph showing the permeabilities of the magnetic poles of the magnetic reproduction devices in accordance with the first and second embodiments of the present invention depending on frequency;

FIG. 4B is a graph showing the output levels of the magnetic reproduction devices in accordance with the first, second and third embodiments of the present invention depending on frequency;

FIG. 5 is a perspective view showing a magnetic reproduction device in accordance with a third embodiment of the present invention.

FIG. 6 is a magnified view showing the magnetic pole 32 in accordance with the third embodiment;

FIG. 7 is an exploded perspective view showing a method of producing a magnetic head in accordance with a fourth embodiment of the present invention;

FIG. 8 is a graph showing the relationship between the frequency of a high-frequency carrier signal and the inductance component and the resistance component of the impedance of an MI head in an analysis used as the basis of the present invention;

FIG. 9 is a graph showing the relationship between the length of the detecting electrode and inductance in the analysis used as the basis of the present invention;

FIG. 10 is a perspective view showing the configuration of an MI head in accordance with the fifth embodiment of the present invention;

FIG. 11A is a plan view showing the electrode forming face of the MI head in accordance with the fifth embodiment of the present invention;

FIG. 11B is a sectional view taken on line B-B of FIG. 11A;

FIG. 12A is a plan view showing the electrode forming face of an MI head in accordance with a sixth embodiment of the present invention; FIG. 12B is a sectional view taken on line B-B of FIG. 12A;

FIG. 13A is a perspective view showing a conventional MI head;

FIG. 13B is a partially magnified view of FIG. 13A;

FIG. 14 is a graph showing the change of the high-frequency carrier signal depending on the intensity of an external magnetic field applied to the conventional MI head; and

FIG. 15 is a graph showing the relationship between the frequency of the high-frequency carrier signal and impedance in the conventional MI head.

## DETAILED DESCRIPTION OF THE INVENTION

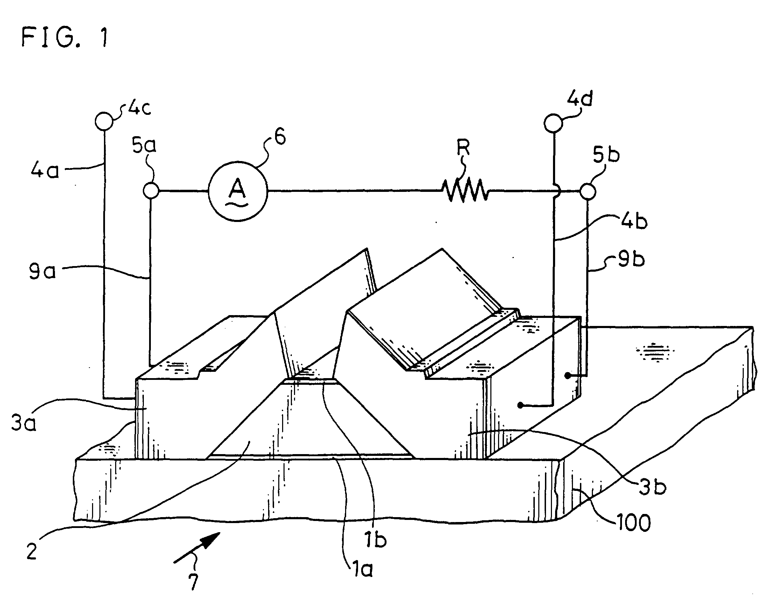

Preferable embodiments in accordance with the present invention will be described below referring to FIG. 1 to FIG. 12B.

[First embodiment]

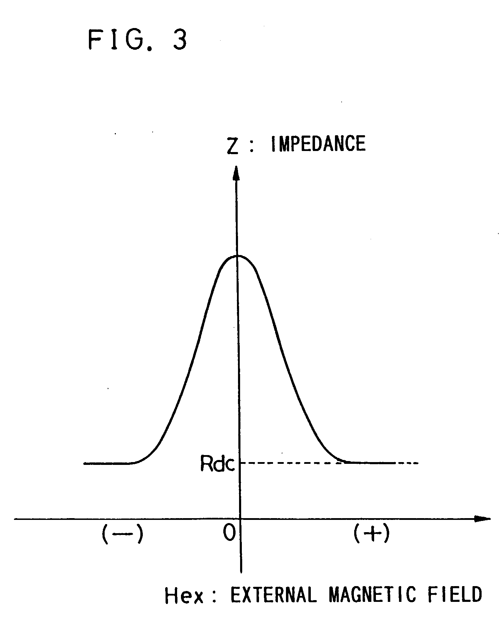

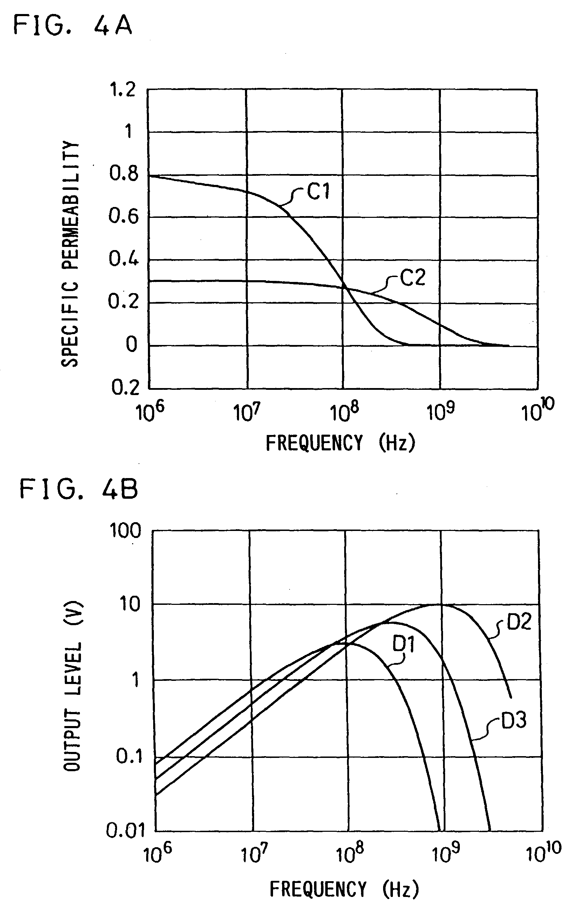

FIG. 1 is a perspective view showing a magnetic reproduction device in accordance with a first embodiment of the present invention. FIG. 3 is a graph showing the relationship between the impedance Z of the magnetic reproduction device of the present invention and an external magnetic field Hex. FIG. 4A is a graph showing the frequency characteristic of the specific permeability of the metallic soft magnetic film constituting the magnetic reproduction device. FIG. 4B is a graph showing the frequency characteristic of the output level of the magnetic reproduction device.

Referring to FIG. 1, a main magnetic pole core 2 having the shape of a trapezoid is a single-layer thin film made of a NiFe alloy, a metallic soft magnetic substance, and is formed on a non-magnetic substrate 100 by sputtering. Non-magnetic insulation films 1a and 1b formed of $SiO_2$ films are formed on the upper and lower faces of the main magnetic core 2 by sputtering to insulate the upper and lower faces of the main magnetic core 2 respectively.

Conductors 3a and 3b are thin-film conductors made of copper (Cu) and provided so as to make contact with the inclined side faces of the trapezoid, i.e., the main magnetic pole core 2. The conductors 3a and 3b are formed by copper evaporation or sputtering by using a predetermined mask. At this time, the upper portions of the conductors 3a and 3b project like peaks. However, these projection portions do not affect the function of the magnetic reproduction device of the present embodiment. One end of a conductive wire 9a is connected to the conductor 3a, and one end of a conductive wire 9b is connected to the conductor 3b. The other end of the conductive wire 9a is connected to a terminal 5a, and the other end of the conductive wire 9b is connected to a terminal 5b. A high-frequency power source 6 is connected across the terminals 5a and 5b via a resistor R, and an alternating current is supplied to the main magnetic pole core 2. As clearly shown in FIG. 1, the conductors 3a and 3b are separate from each other on the upper face of the main magnetic pole core 2, and electrically connected to the inclined side faces of the main magnetic pole core 2, respectively. The alternating current supplied via the conductive wires 9a and 9b flows through the main magnetic pole core 2 in the horizontal direction of the figure. Another pair of conductive wires 4a and 4b is connected to the conductors 3a and 3b respectively. The impedance Z across the conductive wires 4a and 4b is represented by expression (1).

$$Z = j\,\frac{\omega S \mu'}{L} + \frac{\omega S \mu''}{L} + Rdc + Reddy \qquad (1)$$

When the alternating current flowing through the main magnetic pole core 2 is represented by "Ic", a voltage Vc, the product of the impedance Z represented by the expression (1) and the above-mentioned alternating current Ic, generates across the conductive wires 4a and 4b (refer to "Magnetic Recording," Volume (1) TECHNOLOGY, C. Denis Mee et al, McGraw-Hill Book Company, p342).

In the expression (1), "Rdc" designates the DC resistance of the main magnetic pole core 2, and Reddy' designates a resistance due to a skin effect and generates the so-called eddy current loss. In addition, μ' and μ" designate a real component and a complex component of a permeability μ, respectively, and "S" designates the sectional area of the magnetic film constituting the main magnetic pole core 2. "L" designates a magnetic path length, i.e., the length of the main magnetic pole core 2 in the direction indicated by arrow 7 in FIG. 1.

The resistance Reddy causing the eddy current loss is represented by expression (2). When the film thickness $t_{mag}$ of the main magnetic pole core 2 is twice or more the thickness of a skin depth $\delta$, the resistance Reddy is proportional to a value obtained when the film thickness $t_{mag}$ is divided by twice the skin depth $\delta$.

$$Reddy = \frac{t_{mag}}{2\delta} \times Rdc \qquad (2)$$

The skin depth $\delta$ is determined by the specific resistance $\rho$ and the permeability

$$\mu(|\mu| = \sqrt{{\mu'}^2 + {\mu''}^2})$$

of the magnetic film and the angular frequency $\omega$ of the alternating current as indicated in expression (3).

$$\delta = \sqrt{2\rho/\omega\mu} \qquad (3)$$

As indicated in the expressions (2) and (3), as the angular frequency $\omega$ and the permeability $\mu$ are higher, the skin depth $\delta$ becomes smaller, and the resistance Reddy becomes larger. The resistance Rdc is represented by expression (4).

$$Rdc = \frac{L\rho}{S} \qquad (4)$$

Expression (5) is obtained when the expression (1) is rewritten by using the expressions (2), (3) and (4).

$$Z = jc \cdot \omega\mu' + \{a \cdot \omega\mu'' + b\sqrt{\omega\mu} + 1\}Rdc \qquad (5)$$

where,

$$a = \frac{S_2}{L_2\rho}, \; b = \frac{t_{mag}}{2\sqrt{2\rho}}, \; c = \frac{S}{L}$$

Letters a, b and c are constants determined by the shape and material of the core, independent of the frequency, the magnetic characteristic of the main magnetic pole core 2 and the like.
In the expression (5), when the products of the angular frequency $\omega$ and the permeability $\mu$, $\mu'$, $\mu''$, i.e., $\omega\mu$, $\omega\mu'$ and $\omega\mu''$ become larger, the impedance Z also becomes larger. As a result, the output voltage Vc (Vc=Ic $\cdot$ Z), the product of the above-mentioned alternating current Ic and the impedance Z, also becomes larger.
In the magnetic reproduction device of the present embodiment, the permeabilities $\mu'$ and $\mu''$ of the magnetic films change depending on the external magnetic field, whereby the impedance Z changes. Since the output voltage Vc changes depending on the change in the impedance, the external magnetic field can be detected.
FIG. 3 is a graph showing the relationship between the impedance Z of the magnetic reproduction device of the present embodiment and the intensity of an external magnetic field Hex at a predetermined angular frequency $\omega$. When the intensity of the external magnetic field Hex is zero, that is, when the value on the abscissa of the figure is zero, the impedance Z becomes the maximum value determined by the permeability $\mu$ of the magnetic film and the angular frequency $\omega$ of the alternating current applied to the main magnetic pole 2, as represented by the expression (5). As the intensity of the external magnetic field Hex becomes larger, the magnetic film begins to be saturated, and the permeability $\mu$ decreases, whereby the impedance Z lowers. When the magnetic film is fully saturated, the permeability $\mu$ become a very small value nearly equal to the permeability of the air. As a result, the impedance Z becomes nearly equal to the DC resistance Rdc. The sensitivity is represented by inclination of the change in the impedance Z depending on the intensity of the external magnetic field Hex. In other words, as indicated in expression (6), the sensitivity is represented by k which is obtained when the difference between the impedance Z and the DC resistance Rdc is divided by the intensity of a saturated magnetic field Hsat.

$$k = \frac{jc \cdot \omega\mu' + \{a \cdot \omega\mu'' + b\sqrt{\omega\mu}\}Rdc}{Hsat} \qquad (6)$$

where,

$$a = \frac{S^2}{L^2\rho}, \; b = \frac{t_{mag}}{2\sqrt{2\rho}}, \; c = \frac{S}{L}$$

As clearly indicated in the expressions (5) and (6), since both the output and sensitivity are proportional to the angular frequency $\omega$, the frequency of the high-frequency current to be flown should be as high as possible. Generally speaking, in the permeability $\mu$ at high frequencies, the complex component $\mu''$ is larger than the real component $\mu'$. Therefore, it is preferable that the shape and characteristic of the magnetic film should be selected so that the change in the complex magnetic permeability $\mu''$ appears can be reflected more significantly to the change of the impedance Z.
As specific examples of the first embodiment, the film thickness ($t_{mag}$) of a soft magnetic film of the main magnetic pole core 2 is 1 $\mu$m, the film width corresponding to the track width is 0.5 $\mu$m, and a NiFe alloy is used as the soft magnetic material.
The frequency characteristic of the permeability of the metallic soft magnetic film in accordance with the present embodiment is shown by curve C1 in FIG. 4A. In addition, the frequency characteristic of the output level is shown by curve D1 in FIG. 4B.

[Second embodiment]

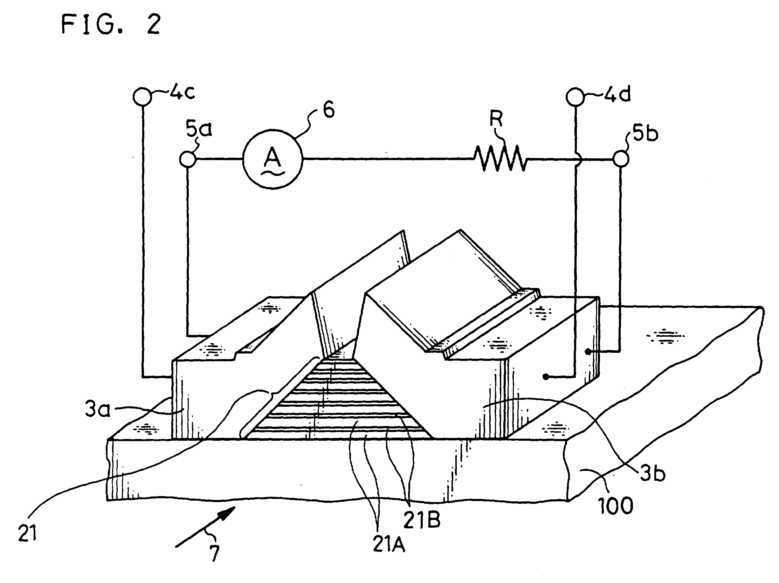

FIG. 2 is a perspective view showing a magnetic reproduction device in accordance with a second embodiment of the present invention. In the second embodiment, soft magnetic films 21A having a thickness of several microns and non-magnetic films 2B having a thickness of several hundred angstroms are laminated alternately on a non-magnetic substrate 100 to have a multi-layer structure, thereby forming a main magnetic pole core 21. In the main magnetic pole core 21, the magnetic films 21A are each separated from the non-magnetic films 21B magnetically and electrically. Even if the main magnetic pole core 21 obtained by the multi-layer structure is the same as the main magnetic pole core of the first embodiment with respects, to dimensions, the main magnetic pole core 21 can have a higher permeability and a lower eddy current loss at high frequencies than the main magnetic pole core of the first embodiment.

The curve C2 of FIG. 4A shows the frequency characteristic of the permeability of the main magnetic pole core 21 in the second embodiment. As clearly shown in the figure, in comparison with the curve C1 of the first embodiment, the reduction in the permeability is small even at high frequencies, and the change in the permeability depending on frequency is also small. Since the main magnetic pole core 21 has a high permeability at high frequencies, the frequency of the high-frequency current applied to the main magnetic pole core 21 can be raised. As a result, as indicated by curve D2 of FIG. 4B, the frequency characteristic of the output level can be improved significantly, and magnetization recorded at a high density and at a high frequency can be detected with a high sensitivity.

[Third embodiment]

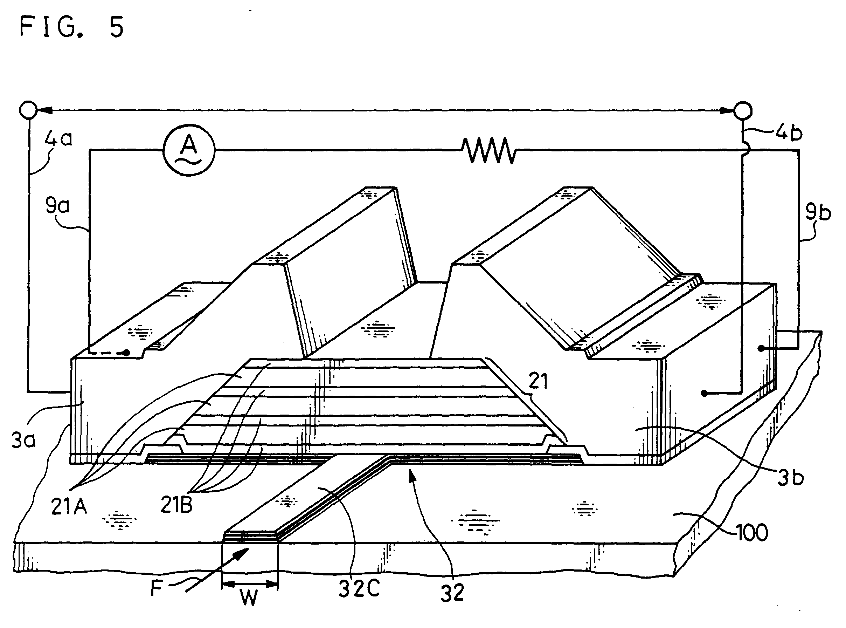

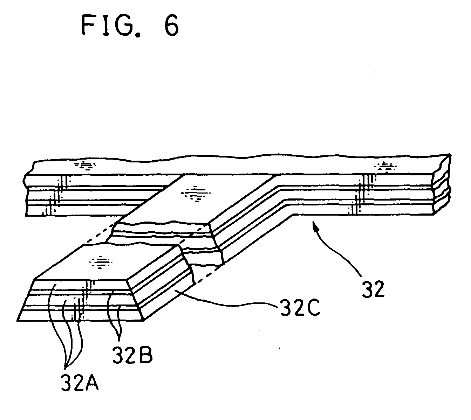

FIG. 5 is a perspective view showing a magnetic reproduction device in accordance with a third embodiment of the present invention. The basic configuration of the main magnetic pole core 21 thereof is the same as that of the above-mentioned second embodiment. In the present embodiment, a thin magnetic pole 32 having a projection portion 32C used as a magnetic flux introducing magnetic pole is provided to detect magnetization at minute areas on a magnetic recording medium. Generally speaking, as the magnetic pole 32 is made thinner, a closure domain inside the face of the magnetic film of the magnetic pole 32 becomes larger due to the magnetic charges on the end face F of the magnetic pole 32, and the permeability of the magnetic film lowers. In the present embodiment, as shown in FIG. 6, a magnified view of the magnetic pole 32, magnetic films 32A and non-magnetic films 32B, both having a thickness of 50 to 500 angstroms, are laminated alternately to obtain a multi-layer film, thereby forming the magnetic pole 32. As a result, neighboring magnetic films 32A are separated magnetically from each other. In the present embodiment, the magnetic pole 32 is provided with the projection portion 32C having a narrow width W, whereby the magnetic pole 32 can be used for a magnetic medium having a narrow track width. In the magnetic pole 32 having this kind of multi-layer film, the magnetic charges at the ends of the magnetic films at individual layers are cancelled with one another among the multi-layer films. Therefore, even if the magnetic pole 32 is processed to have a narrow width W, the magnetic domains of the magnetic films are not disturbed, and the permeability at high frequencies can be maintained high. However, when the multi-layer film magnetic pole 32 is compared with a single-layer film magnetic pole having the same thickness, the sectional area of the magnetic films decreases because of the existence of the non-magnetic films, whereby the absolute value of the permeability lowers. However, in the third embodiment, the portion serving to convert an impedance change into a voltage change is the main magnetic pole core 21. Therefore, even if the absolute value of the permeability of the magnetic pole 32 is low, a magnetic flux is introduced to the main magnetic pole core 21 by the magnetic pole 32 magnetized by an external magnetic field, whereby the main magnetic pole 21 is magnetized by the external magnetic field even at high frequencies. This improves the frequency characteristic of the permeability.

Just as in the case of the second embodiment, the main magnetic pole core 21 is multi-layered by using non-magnetic films 21B and magnetic films 21A so that the that main magnetic pole core 21 is thicker than the magnetic pole 32. This prevents a magnetic flux due to a high-frequency current from concentrating on the surface of the main magnetic pole core 21 owing to eddy currents, thereby preventing magnet-sensitive portions from localizing. FIG. 4B is a graph showing the frequency characteristics of the reproduction output levels in the case when reproduction heads are formed of the magnetic reproduction devices in accordance with the first, second and third embodiments. Referring to the figure, curves D1, D2 and D3 represent the frequency characteristics of the magnetic heads formed of the magnetic reproduction devices in accordance with the first, second and third embodiments respectively. As clearly shown in the figure, the frequency characteristics of those in the second and third embodiments are improved in comparison with that of the first embodiment. When the first embodiment is compared with the third embodiment, the output in the third embodiment is larger than that in the first embodiment at high frequencies, even in the decrease of the film width W corresponding to the track width.

By combining the magnetic reproduction device in accordance with each embodiment of the present invention with an inductive-type thin-film magnetic head to form a complex magnetic head, it is possible to obtain a magnet-flux-response-type magnetic reproduction head being excellent in the high frequency characteristic by a simpler configuration than that of the conventional head.

[Fourth embodiment]

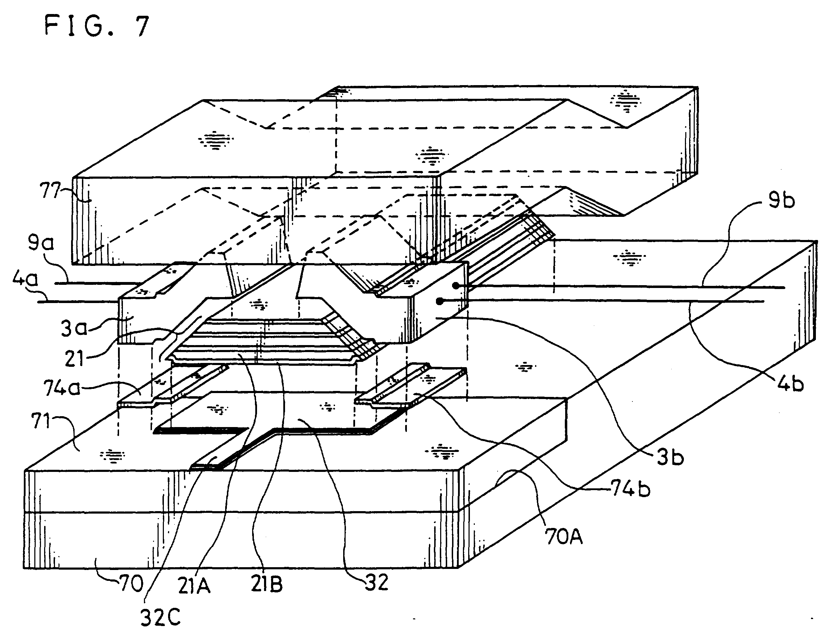

A method of producing a magnetic head will be described below as a fourth embodiment of the present invention referring to FIG. 7, an exploded perspective view. Since the elements of the magnetic head of the present invention are formed of thin films, it is possible to produce them by using the film-forming technology widely used in the field of semiconductor device production. The steps of processing the elements will be described below referring to FIG. 7.

A step portion 70A is formed by dicing a part of a substrate 70 formed of a magnetic substance made of an oxide, such as ferrite. A non-magnetic insulation film 71 made of $SiO_2$ or the like is formed on the step portion 70A by sputtering, and subsequently, its upper contact face shown in the figure is smoothened by lapping. Non-magnetic films of $SiO_2$ having a thickness of 50 angstroms and magnetic films of a NiFe alloy having a thickness of at least 100 angstroms are laminated alternately on the insulation film 71 by sputtering, thereby forming the multi-layer film magnetic pole 32 including the projection portion 32C. Conductor layers 74a and 74b of Cu or the like are formed at both ends of the magnetic pole 32 by sputtering. The conductor layers 74a and 74b are used to ensure the connection between conductors 3a and 3b to be formed thereon respectively and the magnetic pole 32.

Next, magnetic films 21A of the NiFe alloy and non-magnetic films 21B of $SiO_2$ are laminated alternately by sputtering and etched by ion milling so as to have a trapezoidal shape, thereby forming a main magnetic pole core 21. In addition, after a Cu film or a Ta film is formed by sputtering on the inclined faces of the trapezoidal main magnetic pole core 21, the conductors 3a and 3b are then formed by ion milling. At this time, conductive wires 4a and 9a connected to the conductor 3a, and conductive wires 4b and 9b connected to the conductor 3b are formed simultaneously. In the end, a magnetic pole 77 covering the substrate 70 is formed by sputtering of the NiFe alloy, thereby completing the production of a magnetic head. According to the production method of the present embodiment, the elements of the magnetic head are formed by sputtering. Therefore, the efficiency of the production is high, and a production cost is inexpensive.

[Fifth embodiment]

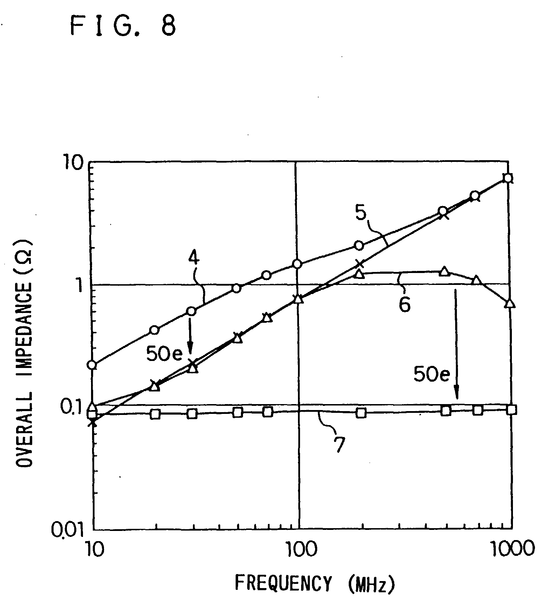

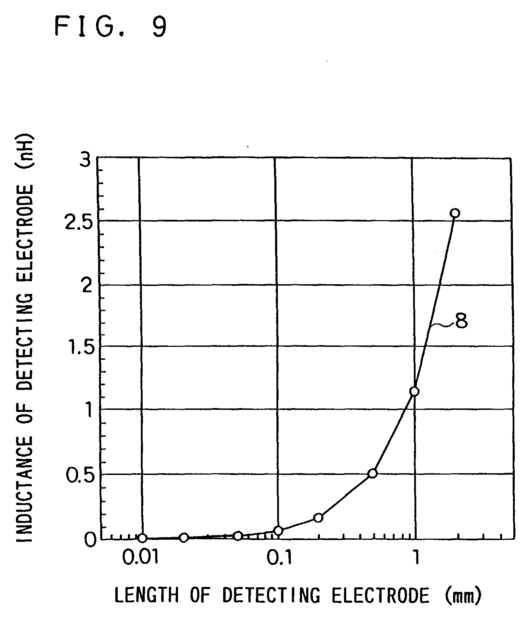

Before explaining a magnetic head in accordance with a fifth embodiment of the present invention, an MI head (not shown) produced as a prototype in order to analyze the operation characteristic of the MI head at high frequencies will be explained referring to FIG. 8 and FIG. 9. This MI head was made by holding a gap of 0.3 μm formed by $SiO_2$ and a detecting conductor thin film of Cu having a width of 400 μm, a length of 2 mm and a thickness of 1 μm between soft magnetic substances of FeTaN having a width of 300 μm and a length of 3 mm.

Instead of signal magnetization from a magnetic recording medium, a DC magnetic field was applied along the length of the soft magnetic substances of the prototype MI head by using a Helmholtz coil as the generation source of an external magnetic field.

In this condition, a high-frequency carrier signal was applied to the detecting conductor thin film. The overall impedance of the prototype MI head including the detection conductor thin film was measured by using an impedance meter, the detection lead of which was connected to the terminal of the detecting conductor thin film. Incidentally, the soft magnetic substances of the MI head fully saturate when the intensity of the applied magnetic field is 5 Oe or more.

FIG. 8 is a graph showing relations of the overall impedance of the MI head including the detecting conductor thin film and the frequency of the high-frequency carrier signal applied to the detecting conductor thin film, which was measured with the impedance meter.

The impedance meter can separately measure an inductance component and a resistance component in an impedance. Referring to FIG. 8, curves 4 and 5 indicate the changes in the inductance component depending on the frequency of the high-frequency carrier signal and regarding the real part and the imaginary part of the permeability in the cases of zero and 5 Oe in the intensity of the external magnetic field, respectively. Curves 6 and 7 indicate the changes in the resistance component.

Referring to FIG. 8, the curves 4 and 5 indicating the changes in the inductance component of the overall impedance of the prototype MI head including the detecting conductor thin film depending on the frequency of the high-frequency carrier signal are similar to the curves 1 and 2 of FIG. 15 indicating the changes in the impedance of the conventional MI head. According to the curves 4 and 5, the inductance component due to the detecting conductor thin film, the connection lead wires and the like, not changing depending on the external magnetic field, is large in the high-frequency region. Therefore, it is indicated that the inductance component which does not change depending on the external magnetic field becomes dominant, and the inductance component of the magnetic detection portion which changes depending on the external magnetic field is hidden.

On the other hand, the curves 6 and 7 of FIG. 8 indicating the changes in the resistance component of the overall impedance of the MI head including the detecting conductor thin film indicate that the resistance component changes significantly depending on the external magnetic field. This has been found by this analysis for the first time.

More specifically, the change curve 4 of the inductance component in FIG. 8 indicates the sum of the inductance component generating from the real part of the permeability of the soft magnetic substance and changing depending on the external magnetic field, and the inductance component generating from the detection conductor thin film and the connection lead wires and not changing depending on the external magnetic field. When an external magnetic field having an intensity of 5 Oe is applied, the change curve 5 is obtained. This indicates that the permeability of the soft magnetic substance becomes close to 1, a value obtained in the air, due to magnetic saturation, whereby the inductance components of the detection conductor thin film and the connection lead wires which do not change depending on the external magnetic field remains dominantly.

Furthermore, the resistance component indicated by the change curve 6 is the sum of the resistance component generating from the imaginary part of the permeability of the soft magnetic substance and changing depending on the external magnetic field and the resistance component generating from the detection conductor thin film and the connection lead wires and not changing depending on the external magnetic field. When an external magnetic field having an intensity of 5 Oe is applied, the change curve 7 is obtained. This indicates that the permeability of the imaginary part of the soft magnetic substance becomes 1, whereby the resistance component of the detecting conductor not changing depending on the external magnetic field becomes dominant.

FIG. 9 is a graph showing the change in the inductance of the detecting conductor thin film having a thickness of 1 μm and a width of 10 μm depending on the length of the detecting conductor thin film. As shown in FIG. 9, the inductance of the detecting conductor thin film decreases significantly as the length of the detecting conductor thin film becomes 100 μm or less as indicated by the curve 8. This has been found for the first time.

The magnetic head of the present invention has been invented on the basis of the findings obtained by the above-mentioned analyses. In other words, it is found important to detect only the change in the impedance generating from the detecting conductor thin film of the magnetic detection portion and changing depend on the external magnetic field in the high-frequency region by drastically decreasing the inductance component generating from the detecting conductor thin film and the connection lead wires and not changing depending on the external magnetic field.

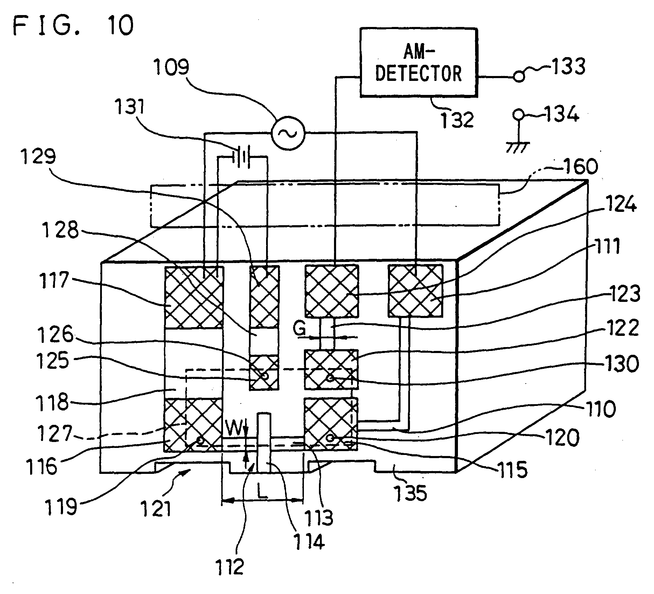

A fifth embodiment of the present invention will be described below referring to FIG. 10 to FIG. 12.

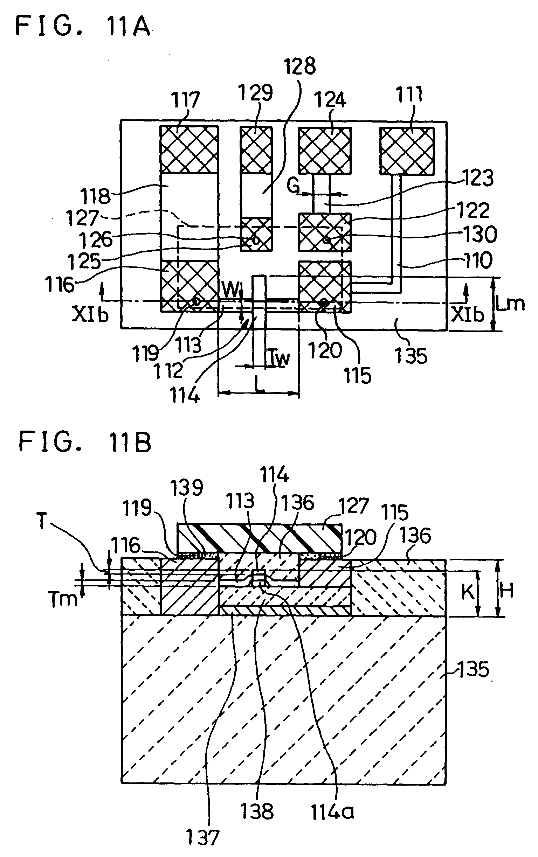

FIG. 10 is a perspective view showing the configuration of an MI head in accordance with the fifth embodiment of the present invention. FIG. 11A is a plan view showing the electrode forming face of the MI head shown in FIG. 10, and FIG. 11B is a sectional view taken on line XIb-XIb of FIG. 11A.

Referring to FIG. 10, a high-frequency generator 109 for supplying a high-frequency carrier signal with a superimposed DC current for generating a bias magnetic field to the MI head is connected across a signal supply terminal 111 and a ground terminal 117 disposed on a substrate 135.

In a magnetic detection portion 112, a detecting conductor thin film 113 of Cu is held between two layers of soft magnetic thin films 114 and 114a of amorphous FeTaN. A detecting electrode terminal 115 and a ground electrode terminal 116 are provided at both ends of the detecting conductor thin film 113 respectively. The detecting electrode terminal 115 is connected to the signal supply terminal 111 via a resistor film 110. The ground electrode terminal 116 is connected to the ground terminal 117 via a conductive thin film 118 of Cu.

A silicon microchip (hereinafter referred to as a bare chip) 127 used as a high-frequency amplifier and shown in FIG. 10 and FIG. 11A is indicated as being enclosed by a broken line so that the electrode terminals can be shown clearly. A DC power source 131 for supplying electric power to the bare chip 127 is connected across the ground terminal 117 and a power supply terminal 129. A bare chip power source terminal 126 is directly connected to the power source terminal 125 connected to the power supply terminal 129 via a conductor film 128, and a bare ground terminal 119 is directly connected to the ground electrode terminal 116 connected to the ground terminal 117.

The output signal amplified by the bare chip 127 is transmitted from the output terminal 122 directly connected to the output terminal 130 of the bare chip 127 to an external output terminal 124 via a conductor thin film 123. This output signal is input to an AM detector 132 connected to the external output terminal 124. The signal which is AM-modified by signal magnification applied from a magnetic recording medium to the MI head is amplified by the bare chip 127, and transmitted as an output signal to the external output terminal 124. This output signal is generated across the output terminal 133 and the ground terminal 134 of the AM detector 132 as a signal obtained by demodulating the signal magnetization from the magnetic recording medium by using the AM detector 132 connected to the external output terminal 124.

Wires in a region 160 indicated by a two-dotdash line in the figure, which are connected from the terminals 111 and 117 to the high-frequency generator 109 and from the terminal 124 to the AM detector 132 respectively, are connected by using transmission paths formed of microstrip lines, because a high-frequency signal of 1 GHz is handled. This is advantageous in that the high-frequency generator 109 and the AM detector 132 can be provided at a place away from the MI head. Grooves 121 are formed on the face of the substrate 135 of the MI head opposite to the magnetic recording medium so as to float from the surface of the magnetic recording medium rotating at high speed. The substrate 135 is made of NiTiMg-based ceramics, a non-magnetic substance, in order to fully exploit the characteristic of the soft magnetic material FeTaN.

Next, the inner structure of the MI head in accordance with the fifth embodiment will be described below referring to FIG. 11B.

In FIG. 11B, a first ground film 137 of Cu is formed by photolithography on the substrate 135 made of NiTiMg-based ceramics, and a dielectric film 138 of alumina is formed thereon. The detecting conductor thin film 113, the first ground film 137 and the dielectric film 138 configure a first microstrip line as described above. By this first microstrip line, the impedance of the detecting conductor thin film 113 is matched to the input impedance of the semiconductor bare chip 127 used as a high-frequency amplifier with respect to the high-frequency carrier signal.

The characteristic impedance value of the first microstrip line is determined by the width W of the detecting conductor thin film 113, the thickness h and the dielectric coefficient of the dielectric film 138. Since the dielectric film 138 is made of alumina having a dielectric coefficient of 10, in the case when W/h is 1, the characteristic impedance of the first microstrip line is 50 ohms. Therefore, when the thickness h of the dielectric film 138 of alumina is 10 $\mu$m, the width W of the detecting conductor thin film 113 should only be set to 10 $\mu$m. Transmission paths having a characteristic impedance of 50 ohms are generally used for electrical circuits operating in the high-frequency region. Therefore, the impedance is unified into 50 ohms at the time of carrying out impedance matching.

The width G of the conductor film 123 connecting the output terminal 122 to the external output terminal 124 is also 10 $\mu$m. Just like the detecting conductor thin film 113, the conductor film 123 is also formed over the first ground film 137 via the dielectric film 138, thereby forming a microstrip line having a characteristic impedance of 50 ohms.

Furthermore, the input terminal 120, the ground terminal 119, the output terminal 130 and the power source terminal 126 of the bare chip 127 are each formed of a hemispheric terminal of Au on the face of the substrate on which the bare chip 127 is mounted. The terminals 119, 120, 126 and 130 of the bare chip 127 are heated and soldered to the detecting electrode terminal 115, the ground electrode terminal 116, the output terminal 122 and the power source terminal 125 provided on the substrate 135 by using conductive Ag paste 139, respectively.

A high-frequency amplifier, such as a transistor or an FET, is usually configured such that a bare chip cut from a microchip formed on a silicon water is accommodated in a mold case. The input terminal, output terminal, power source terminal and ground terminal of the bare chip are connected to the inner sides of the terminals of the mold case passing through the mold case to the outside by Au wire bonding. The outside terminals of the mold case are inserted into a printed-circuit board to establish connection thereto.

It is inevitable that the overall size of this kind of high-frequency amplifier wherein a very small bare chip is accommodated inside a mold case becomes large on the order of millimeters. In other words, it is inevitable that an inductance component in a high-frequency range increases because the connections from the terminals of the mold case to the terminals of the bare chip are carried out by using the terminals of the mold case and Au wires. The size of the bare chip is about 140 to 50 $\mu$m square. Therefore, the bare chip has a size adequately mountable on the substrate used as a slider of the MI head even if the lead terminal portions provided on the bare chip are taken into consideration.

In the present invention, attention is paid to this point. In particular, the input terminal 120 and the ground terminal 119 of the bare chip 127 are directly joined to the detecting electrode terminal 115 and the ground electrode terminal 116 respectively provided at both ends of the detecting conductor thin film 113 having a length of 100 $\mu$m or less. With this configuration, the impedance component at the connection paths between these terminals, not changing depending on the external magnetic field, can be decreased significantly.

In other words, this configuration uses no lead wires, thereby hardly causing the inductance component of the connection paths between the magnetic detection portion 112 and the bare chip 127 used as a high-frequency amplifier. Therefore, the inductance component is mainly determined by the length of the detecting conductor thin film 113 of the magnetic detection portion 112.

Furthermore, it is important that the face of an alumina film 136 used as an overcoat formed to cover the magnetic detection portion 112 before the bare chip 127 is stuck thereto should be smoothened by grinding so that the face is higher than the height K of the magnetic detection portion 112 and is as high as the face of the detecting electrode terminal 115 from the face of the substrate 135, i.e., a height H. If this smoothening process is omitted, the silicon substrate of the bare chip 127 is highly likely to break.

Moreover, in the case of the MI head in accordance with the fifth embodiment, by forming a plurality of the MI heads arranged on the substrate 135, the MI heads can be inspected in the condition wherein the plural MI heads are arranged on the substrate 135 before the MI heads are cut out as individual chips. In the inspection, the substrate 135 on which the plural MI heads are arranged is disposed in a Helmholtz coil, and the probe of a network analyzer is connected across the detecting electrode terminal 115 and the ground electrode terminal 116.

By applying a DC magnetic field in the direction perpendicular to the paper face of the FIG. 10 in the above-mentioned condition, it is possible to judge whether the MI heads are proper or not. Since the impedance of the probe of the network analyzer is generally 50 ohms, it is preferable that impedance matching can be attained in this condition.

The bare chip 127, used as a high-frequency amplifier and having input and output impedances of 50 ohms, was used for the experiment. With respect to the impedance matching, it was experimentally found that characteristic impedances having differences in a range within ±5% were able to be regarded as nearly identical in actual practice.

The width W of the detecting conductor thin film 113 of the first prototype MI head in accordance with the fifth embodiment was set at 10 μm, the thickness T thereof was set at 1 μm, and the length L thereof was set at 100 μm. A film of FeTaN was used as the soft magnetic film 114. The track width Tw was set at 10 μm, the thickness Tm of the soft magnetic film 114 was set at 1.5 μm, and the length Lm thereof was set at 1 mm. When the first prototype MI head was measured by using a high-frequency carrier signal of 1 GHz, it was found that the percentage of the impedance change was 24%. Furthermore, by shortening the length L of the detecting conductor thin film 113, the percentage of the impedance change can be increased significantly.

In a second prototype MI head in accordance with the fifth embodiment, the width W of the detecting conductor film was set at 10 μm, the thickness T thereof was set at 1 μm, the length L thereof was set at 10 μm, and the track width Tw was set at 0.5 μm. The thickness Tm of the soft magnetic film was set at 1.5 μm, and the length Lm thereof was set at 1 mm. In other words, in this kind of MI head having a narrow track width of 0.5 μm, the length L of the detecting conductor thin film 113 can be shortened to 10 μm.

In the second prototype MI head, when a film of FeTaN was used as the soft magnetic film 114, the percentage of the impedance change was 52% as the result of a measurement conducted by using a high-frequency carrier signal of 1 GHz. Furthermore, when a material, such as a Fe-based material, the frequency characteristic of the permeability of which changed at up to the high-frequency range, was used as the material of the soft magnetic film of the second prototype, it was found that the percentage of the impedance change reached 94%.

It is found that the percentage of the impedance change is very high in comparison with about 5 to 7%, that is, the percentage of the impedance change of a spin bubble giant MR head using a magnetic bubble generating substance as a magnetoresistance effect device being developed at present.

The detecting conductor films 113 having lengths L of 10 μm and 100 μm have been described above as examples of the prototypes of the MI head. If the length L is 100 μm or more, the inductance component of the detecting conductor thin film becomes large significantly as shown in FIG. 9, and it becomes difficult for the detecting conductor thin film to carry out sufficient signal detection.

[Sixth embodiment]

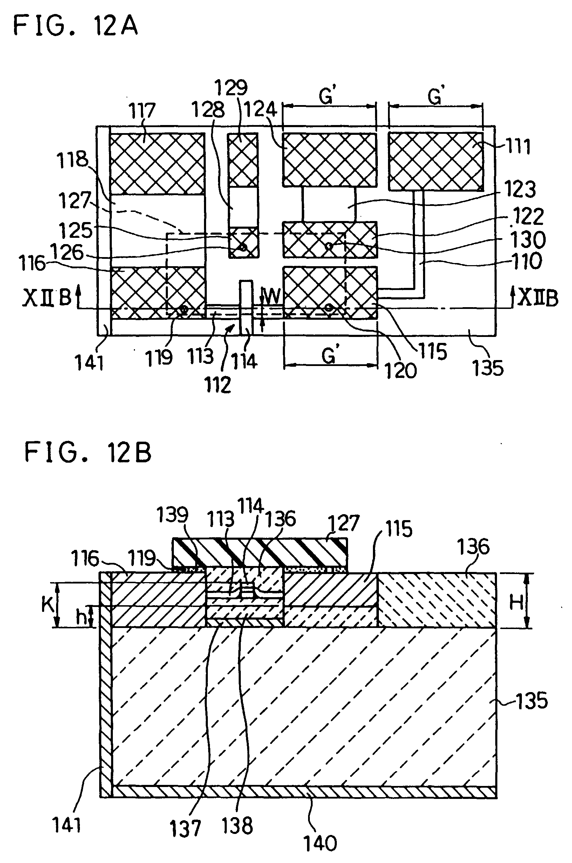

An MI head in accordance with a sixth embodiment of the present invention will be described below referring to FIG. 12A and FIG. 12B. FIG. 12A is a plan view showing the configuration of the MI head in accordance with the sixth embodiment of the present invention, and FIG. 12B is a sectional view taken on line B-B of FIG. 12A. The MI head in accordance with the sixth embodiment has a structure obtained by modifying the MI head in accordance with the fifth embodiment so that matching to a high-frequency carrier signal can be attained more easily.

In the above-mentioned MI head in accordance with the fifth embodiment, impedance matching for the MI head itself has been attained by the first strip line. Subsequently, the electrode terminals and the external connection terminal portions of the MI head must also be configured so that impedance matching of their characteristic impedances to the high-frequency carrier signal can be attained easily.

The detecting electrode terminal 115, the output terminal 122 and the like of the MI head are required to have sufficient dimensions so that joining metal, such as solder, for connection to the bare chip 127 can be mounted thereon. For example, the hemisphere of each Au terminal of the bare chip 127 has a diameter of about 80 μm. Therefore, an area of at least about 100 μm square is required as the sizes of the detecting electrode terminal 115 and the output terminal 122. In addition, a wide thin film is preferable as an electrode terminal in order to stably deal with the high-frequency carrier signal.

However, as already explained in the descriptions of the MI head in accordance with the fifth embodiment, in order to obtain a characteristic impedance of 50 ohms, the ratio W/h should be 1 in the case of alumina having a dielectric coefficient of 10. The width W of the conductor film thus relates to the thickness h of the dielectric film 138 made of alumina. In other words, to set the width of the conductor film constituting each electrode terminal at 100 μm, the thickness of the dielectric film 138 is also required to be set at 100 μm. However, it is almost impossible in production to form this kind of thick alumina film by vapor deposition or sputtering. The magnetic head in accordance with the sixth embodiment has been invented to solve this problem.

In the case that the substrate 135 is considered as a dielectric, since the dielectric coefficient of the NiTiMg material is about 5, its characteristic impedance becomes 50 ohms when W/h is set at 1.8. In other words, when a conductor film constituting an electrode terminal and having a width of 100 $\mu$m is necessary, the substrate 135 used as a dielectric is required to have a thickness of 180 $\mu$m.

Referring to FIG. 12A and FIG. 12B, in the MI head in accordance with the sixth embodiment, the width of each electrode terminal was set at 300 $\mu$m, and the substrate 135 as a dielectric was finished by machining so as to have a thickness of 540 $\mu$m. A second ground conductor film 140 was formed on the bottom face of the substrate 135. Although the alumina dielectric film 138 having a thickness of 10 $\mu$m is formed on the surface of the substrate 135, since the thickness is far smaller than the thickness of the substrate 135, that is, 540 $\mu$m, the alumina dielectric film 138 can be ignored for the transmission of high-frequency signals.

Furthermore, a conductor film 141 was formed by the sputtering vapor evaporation method to attain electrical connection so that the first ground film 137 and the second ground film 140 are commonly grounded on a side face of the substrate 135.

A second microstrip line is formed of the detecting electrode terminal 115 having a terminal width G' of 300 $\mu$m, the substrate 135 and the second ground film 140 formed on the bottom face of the substrate 135. Another second microstrip line is formed of the output terminal 122 having a terminal width G' of 300 $\mu$m, conductor films 123 and 124 also having a terminal width G' of 300 $\mu$m, the substrate 135 and the second ground film 140. Still another second microstrip line is formed of the signal supply terminal 111 having a terminal width G' of 300 $\mu$m, the substrate 135 and the second ground film 140. Three sets of second microstrip lines, each having a characteristic impedance of 50 ohms, are thus formed as described above.

With this configuration, in the MI head in accordance with the sixth embodiment, the first microstrip line comprising the detecting conductor thin film 113, the alumina dielectric film 138 and the first ground film 137 has a characteristic impedance of 50 ohms. In addition, the above-mentioned three sets of second microstrip lines are also formed to have a characteristic impedance of 50 ohms. As a result, proper impedance matching to the high-frequency carrier signal can be attained in all the transmission paths.

In the above-mentioned MI heads in accordance with the fifth and sixth embodiments, the soft magnetic substance is formed of a FeTaN film. However, it may be formed of a Co-based or Fe-based amorphous magnetic substance or a soft magnetic material, such as Permalloy or sendust.

In addition, the substrate made of NiTiMg is taken as an example in the above descriptions. However, the substrate may be made of AlTiC, ceramics, glass or carbon.

On the other hand, the detecting conductor thin film and the conductor film are made of Cu. However, they may be made of a conductive material, such as Ag, Au, Al or the like.

Furthermore, the dielectric film of the first microstrip line is made of alumina. However, it may be made of an inorganic dielectric, such as Si, SiO$_2$, glass, carbon or ceramics.

It is a matter of course that a magnetic recording reproduction apparatus can be configured by combining the MI head in accordance with each of the embodiments of the present invention described above with a known magnetic-type writing (recording) head comprising a coil.

**Claims**

1. A magnetic reproduction device comprising:

   a first non-magnetic insulation film (1a) formed on an insulation substrate (100);
   a main magnetic pole core (2) of a metallic soft magnetic film formed on said first non-magnetic insulation film;
   a second non-magnetic insulation film (1b) formed on said metallic soft magnetic film;
   a pair of conductors (3a and 3b) formed on said insulation substrate and electrically connected to both ends of said metallic soft magnetic film respectively;
   a first pair of electrode terminals (5a and 5b) connected to said pair of conductors respectively to supply a high-frequency current from an external constant current source to said conductors; and
   a second pair of electrode terminals (4c and 4d) connected to said conductors respectively to output a voltage generated by said high-frequency current. (FIG. 1)

2. A magnetic reproduction device in accordance with claim 1, wherein said metallic soft magnetic film (2) is a multi-layer film (21) separated by a magnetic insulation film. (FIG. 2)

3. A magnetic reproduction device comprising:

   a magnetic pole (32) of a multi-layer film including metallic soft magnetic films (32A) and conductive magnetic insulation films (32B) alternately laminated on an insulation substrate (100;
   a main magnetic pole core (21) including metallic soft magnetic films (21A) and electric insulation films (21B) alternately laminated on said magnetic pole (32) formed of said multi-layer film;

a pair of conductors (3a and 3b) formed on said insulation substrate and electrically connected to both ends of said metallic soft magnetic films of said main magnetic pole core (21) respectively;

a first pair of electrode terminals (9a and 9b) connected to said pair of conductors respectively to supply a high-frequency current from an external constant current source to said conductors; and

a second pair of electrode terminals (4a and 4b) connected to said conductors respectively to output a voltage generated by said high-frequency current. (FIG. 5)

4. A magnetic reproduction device in accordance with claim 3, wherein said magnetic pole (32) formed of said multi-layer film has a projection portion (32C) opposite to a recording medium. (FIG. 5)

5. A method of producing a magnetic head comprising the steps of:

forming a step portion at a part of a substrate (70) made of an oxide magnetic substance and forming a non-magnetic insulation film (71) at said step portion by sputtering;

forming a magnetic pole (32) of a first metallic soft magnetic multi-layer film having a multi-layer structure and being magnetically insulated and electrically conductive among said layers on said insulation film by sputtering;

forming first conductor layers (74a and 74b) electrically connected to the ends of said magnetic pole of said first metallic soft magnetic multi-layer film by sputtering;

forming a main magnetic pole core (21) of a second metallic soft magnetic multi-layer film and insulated electrically and magnetically among said layers on said first conductor layers and said magnetic pole (32) of said first metallic soft magnetic multi-layer film by sputtering;

forming second conductors (3a and 3b) electrically connected to the side faces of said main magnetic pole core respectively by sputtering;

forming a pair of conductive wires (4a and 4b)and another pair of conductive wires (9a and 9b) connected to said second conductors respectively by sputtering; and

forming a magnetic pole (77) for covering said substrate (70).

6. A magnetic head comprising:

a two-layer soft magnetic film formed on a substrate (135) to detect the magnetization of a recording magnetic medium;

a detecting conductor thin film (113) formed on said substrate so that a part thereof is held between the two layers of said two-layer soft magnetic film (114);

a ground electrode terminal (116) formed on one side of said soft magnetic film on said substrate and connected to one end of said detecting conductor thin film;

a detecting electrode terminal (115) formed on the other side of said soft magnetic film on said substrate and connected to the other end of the detecting conductor thin film via a dielectric film(138);

a signal supply terminal (111) formed on said substrate to input a high-frequency carrier signal with a superimposed DC current for generating a bias magnetic field from an external power source (109), and a ground terminal (117) formed on said substrate;

conductor films (110 and 118) formed on said substrate to connect said signal supply terminal to said detecting electrode terminal and to connect said ground terminal to said ground electrode terminal;

a high-frequency amplifier (127) comprising a semiconductor bare chip and amplifying said high-frequency carrier signal;

at least the signal input terminal and the ground terminal of said high-frequency amplifier comprising said semiconductor bare chip being directly connected to said detecting electrode terminal and said ground electrode terminal respectively. (FIG. 10 and FIG. 11)

7. A magnetic head in accordance with claim 6, further provided with a first microstrip line comprising a first ground film (137) formed on said substrate, the dielectric film (138) formed on said first ground film, said detecting conductor thin film and said detecting electrode terminal formed on said dielectric film. (FIG. 11B)

8. A magnetic head in accordance with claim 6, wherein the faces of said detecting electrode terminal and said ground electrode terminal are smoothened so that the height (H) of said detecting electrode terminal and said ground electrode terminal from the surface of said substrate is larger than the height (K) of a magnetic detection portion (112) configured so as to include said soft magnetic film and so that an overcoat material (136) covering said magnetic detection portion is as high as said detecting electrode terminal and said ground electrode terminal. (FIG. 11B)

9. A magnetic head in accordance with claim 7, wherein the faces of said detecting electrode terminal and said ground electrode terminal are smoothened so that the height (H) of said detecting electrode terminal and said ground electrode terminal from the surface of said substrate is larger than the height (K) of a magnetic detection portion (112) configured so as to include said soft magnetic film and so that an overcoat material (136) covering said magnetic detection portion is as high as said detecting electrode terminal and said ground electrode terminal. (FIG. 11B)

10. A magnetic head in accordance with claim 7, further provided with a second microstrip line comprising said substrate and a second ground film (140) formed on the bottom side of said substrate to connect said first ground film to said second ground film via a conductor layer (141). (FIG. 12B)

11. A magnetic head in accordance with claim 10, wherein the characteristic impedance of said first microstrip line is substantially equal to that of said second microstrip line.

12. A magnetic head in accordance with claim 6, wherein said detecting electrode terminal is connected to said signal supply terminal via a resistor thin film (110) having a resistance of 50 ohms.

13. A magnetic head in accordance with claim 6, wherein the length of said detecting conductor thin film is 100 μm or less.

FIG. 1

FIG. 2

EP 1 045 375 A2

FIG. 3

Z : IMPEDANCE

Rdc

(—)    0    (+)

Hex : EXTERNAL MAGNETIC FIELD

FIG. 4A

FIG. 4B

FIG. 5

EP 1 045 375 A2

FIG. 6

32A 32B 32C 32

FIG. 7

EP 1 045 375 A2

FIG. 8

FIG. 9

FIG. 10

FIG. 11A

FIG. 11B

## FIG. 12A

## FIG. 12B

## FIG. 13A (PRIOR ART)

## FIG. 13B (PRIOR ART)

FIG. 14 (PRIOR ART)

CARRIER SIGNAL LEVEL

55

56

− 0 +

INTENSITY OF EXTERNAL
MAGNETIC FIELD (DC)

FIG. 15 (PRIOR ART)